# DEMANDE DE BREVET EUROPEEN

(11) **EP 2 317 707 A1**
(43) Date de publication de la demande: **04.05.2011**
(21) Numéro de dépôt: 10188787.5
(22) Date de dépôt: 26.10.2010
(51) Int. Cl.: H04L 12/58, H04L 29/08

(54) **Objet à microcircuit de poche et terminal de communication comprenant cet objet**

(30) Priorité: 28.10.2009 FR 0957559
(71) Demandeur: Oberthur Technologies, 92300 Levallois-Perret (FR)
(72) Inventeur: Condemine, Olivier, 92726, Nanterre (FR); Dos Santos, Elder, 92726, Nanterre (FR)
(74) Mandataire: Delumeau, François Guy

(57) **Abrégé**

Cet objet (28) est agencé pour coopérer physiquement avec le terminal de communication (12). Ce terminal (12) est muni d'une interface graphique d'utilisateur (24), pour l'échange de données avec un équipement externe via un réseau de communication (18). L'objet (28) comprend des moyens (40) d'analyse d'au moins un message vocal en provenance d'un serveur de messagerie vocale (22) accessible via le réseau (18) pour en extraire au moins un fichier audio et une information utile associée au message. En outre, l'objet (28) comprend encore des moyens (36) de mémorisation du fichier et des moyens (44) de génération d'une structure de données apte à déterminer un contenu visuel de l'interface (24), la structure de données incorporant l'information utile et un lien d'accès vers le fichier audio mémorisé.

## Description

La présente invention concerne un objet à microcircuit de poche agencé pour coopérer physiquement avec un terminal de communication externe. Elle concerne également le terminal de communication comprenant un tel objet.

Un objet à microcircuit de poche, telle qu'une carte à microcircuit, est généralement dépourvu d'interface-utilisateur. Ainsi, l'objet est par exemple une carte à microcircuit agencée pour coopérer dans un logement prévu à cet effet dans un terminal externe, tel qu'un téléphone cellulaire, par couplage d'une plage de contacts externes de la carte avec une plage de contacts type balais du logement.

Un terminal de communication est généralement apte à communiquer à travers un réseau de communication (sans fil ou filaire) avec par exemple un autre terminal de communication. Un terminal de communication peut être par exemple un téléphone mobile, un assistant personnel du type PDA, un ordinateur, etc. Généralement, le terminal de communication comprend au moins une interface-utilisateur, un navigateur web et un ou plusieurs clients de messagerie.

L'invention s'applique plus particulièrement mais non exclusivement à la gestion de messages vocaux en provenance d'un serveur de messagerie vocale accessible via un réseau de communication.

De façon connue en soi, un serveur de messagerie vocale est fourni par un opérateur de téléphonie mobile et permet en cas d'indisponibilité de l'utilisateur du terminal de communication, de réceptionner un appel vocal émis par un correspondant. Le correspondant peut ainsi laisser un message vocal dans une boîte vocale dédiée à l'utilisateur dans le serveur de messagerie.

Dans l'état de la technique, lorsque l'utilisateur est à nouveau disponible et souhaite écouter le message vocal, il consulte alors directement sa boîte vocale en composant un numéro de téléphone spécifique pour appeler le serveur de messagerie et ainsi accéder au contenu de sa boîte vocale.

Or, à chaque fois que l'utilisateur souhaite consulter les messages vocaux enregistrés dans sa boîte vocale, il doit établir une connexion de son terminal de communication avec le réseau de communication de l'opérateur. Ainsi, si le réseau est indisponible, il lui est impossible d'écouter ses messages vocaux.

En outre, après une première écoute d'un message vocal, ce dernier est stocké pendant une durée limitée fixée par l'opérateur. Généralement, cette durée est égale à environ une semaine et l'utilisateur n'a habituellement pas de maîtrise de cette durée, ce qui peut présenter un inconvénient, notamment lorsque l'utilisateur souhaite réécouter le message vocal ultérieurement.

Enfin, la gestion des messages vocaux de sa boîte vocale, par exemple la lecture et la suppression de messages, offre relativement peu de libertés à l'utilisateur et est habituellement réalisée au moyen de commandes vocales lors de la consultation téléphonique des messages vocaux auprès du serveur de messagerie.

L'invention a notamment pour but de remédier à ces inconvénients et de proposer une gestion des messages vocaux efficace et facile d'utilisation tout en permettant à l'utilisateur une plus grande latitude dans cette gestion.

A cet effet, l'invention consiste en un objet à microcircuit de poche agencé pour coopérer physiquement avec un terminal de communication muni d'une interface graphique d'utilisateur, pour l'échange de données avec un équipement externe via un réseau de communication, **caractérisé en ce qu'**il comprend des moyens d'analyse d'au moins un message vocal en provenance d'un serveur de messagerie vocale accessible via le réseau pour en extraire au moins un fichier audio et une information utile associée au message, des moyens de mémorisation du fichier et des moyens de génération d'une structure de données apte à déterminer un contenu visuel de l'interface, la structure de données incorporant l'information utile et un lien d'accès vers le fichier audio mémorisé.

Au sens de l'invention, le microcircuit représente l'ensemble des moyens électroniques et/ou logiciels incorporés dans l'objet. Habituellement, le microcircuit est réalisé selon la technique classique des circuits intégrés. Toutefois, d'autres modes de réalisation de ce microcircuit peuvent être envisagés sans pour autant sortir du cadre de l'invention.

Dans l'invention, le message vocal est traité pour en extraire un fichier audio et une information utile associée. Cette information utile peut consister par exemple en des informations sur le message vocal, notamment sa provenance, sa date d'émission ou de réception, etc.

L'objet à microcircuit est en particulier apte à générer des données structurées à destination du terminal de communication avec lequel il est apte à coopérer physiquement. Cette structure de données est en particulier apte à déterminer le contenu visuel de l'interface graphique de l'utilisateur du terminal de communication.

Ainsi, cette structure de données, en incorporant une information utile associée au message vocal ainsi qu'un lien d'accès au fichier audio, fournit à l'utilisateur via l'interface graphique du terminal les moyens d'accéder à ce fichier audio, mémorisé par le microcircuit, l'information utile permettant à l'utilisateur d'identifier le message vocal.

Par information utile, on entend, au sens de l'invention, une information permettant une caractérisation du message vocal et notamment sa discrimination du message d'autres messages vocaux. L'information utile associée au message vocal peut consister par exemple en une date d'émission et/ou de réception du message vocal, un identifiant d'un émetteur du message vocal.

Grâce à l'invention, l'utilisateur maîtrise la durée de stockage des messages vocaux qui ne sont plus uniquement stockés sur le serveur de messagerie vocale sous l'autorité par exemple de l'opérateur de téléphonie mobile mais également dans les moyens de mémorisation de l'objet portable.

De plus, pour consulter les messages vocaux, l'utilisateur n'a plus à appeler la boîte vocale mise à disposition par le serveur de messagerie. En effet, grâce à la mémorisation des messages vocaux dans l'objet portable et à la génération d'une structure de données établissant un accès direct au contenu audio mémorisé dans l'objet, l'utilisateur peut consulter ces messages vocaux via l'interface graphique d'utilisateur.

En outre, lorsque l'utilisateur souhaite changer de terminal de communication tout en conservant l'objet portable, il conserve ses messages vocaux préalablement mémorisés dans l'objet. Il peut ainsi garder aussi longtemps qu'il le souhaite des messages vocaux précédemment reçus qu'il souhaite par exemple réécouter ultérieurement.

Enfin, lorsque l'utilisateur souhaite effectuer plusieurs écoutes d'un même message vocal, une disponibilité du réseau de communication n'est plus requise et il peut consulter le message via l'interface graphique d'utilisateur qui lui donne accès au contenu audio stocké dans la mémoire de l'objet à microcircuit.

Un objet à microcircuit selon l'invention peut en outre comporter l'une ou plusieurs des caractéristiques selon lesquelles :
- les moyens de génération comprennent un serveur web et la structure de données forme une page web ;
- le serveur web est du type « Javacard 3.0» et/ou « Smart Card Web Server » ;
- l'objet comprend en outre un client de messagerie apte à communiquer avec le serveur de messagerie vocale ;
- le client de messagerie est configuré pour fonctionner en mode « push », en mode « streaming », et/ ou configuré pour communiquer conformément au protocole IMAP ;
- les moyens d'analyse sont aptes à extraire le message vocal d'un autre message l'incorporant en pièce jointe ;
- l'objet comprend des moyens de création d'une base de données établissant un lien entre l'information utile et le fichier audio associé et des moyens de mise à jour de cette à chaque réception d'un message vocal ;
- l'information utile est choisie parmi un numéro d'identification d'un émetteur du message vocal, une date d'émission et/ou de réception du message vocal, un identifiant de l'émetteur du message vocal ;
- les moyens de génération comprennent des moyens de gestion de messages vocaux par l'intermédiaire de la structure de données générée ;
- les moyens de gestion comprennent des moyens choisis parmi : des moyens de listage des messages, de sélection d'un message, de lecture d'un message, de défilement de messages, de suppression d'un message, d'enregistrement d'un message, de tri de messages, de réception d'un message, de retransmission d'un message, de filtrage de messages, de diffusion de messages, d'archivage de messages, d'annotation du message, d'indexation du message, des moyens de différentiation d'un message lu d'un message non lu ;
- l'objet est choisi parmi une carte à microcircuit, une carte à microcircuit conforme à la norme prédéfinie ISO 7816, une carte à microcircuit de type USB, une carte à microcircuit de type MMC, une carte à microcircuit de type sans contact, une carte à microcircuit d'identification à un réseau de téléphonie mobile, une carte SIM, une carte USIM, une clé mémoire électronique, une carte mémoire de type micro SD, un dispositif MMC sécurisé ;
- la page web est au format HTML, XHTML, WML, DHTML, Javascript ou XML;

L'invention a encore pour objet un système de communication muni d'une interface graphique d'utilisateur, comprenant un terminal de communication et un objet à microcircuit de poche agencé pour coopérer physiquement avec le terminal de communication, **caractérisé en ce que** l'objet de poche est selon l'invention et le terminal de communication comprend des moyens de mise en forme de la structure de données générées pour afficher le contenu visuel sur l'interface graphique.

De préférence, les moyens de génération étant formés en partie par un serveur web, les moyens de mise en comprennent un navigateur web.

D'autres caractéristiques et avantages de l'invention apparaîtront à la lumière de la description qui suit, faite en référence aux dessins annexés dans lesquels :
- la figure 1 représente un objet à microcircuit selon un premier mode de réalisation et un terminal de communication avec lequel l'objet est apte à coopérer physiquement ;
- la figure 2 est une vue schématique du terminal de communication connecté à un réseau de téléphonie mobile comprenant un serveur de messagerie vocale ;
- la figure 3 est une vue schématique des fonctions du microcircuit de l'objet de la figure 1 ;
- la figure 4 est une vue schématique d'un écran du terminal de communication de la figure 1 sur lequel est affiché une interface graphique d'utilisateur ;
- la figure 5 est une vue à échelle agrandie de l'interface graphique d'utilisateur représentée sur la figure 4 ;
- la figure 6 représente un objet à microcircuit selon un deuxième mode de réalisation de l'invention et un terminal de communication avec lequel l'objet est apte à coopérer physiquement.

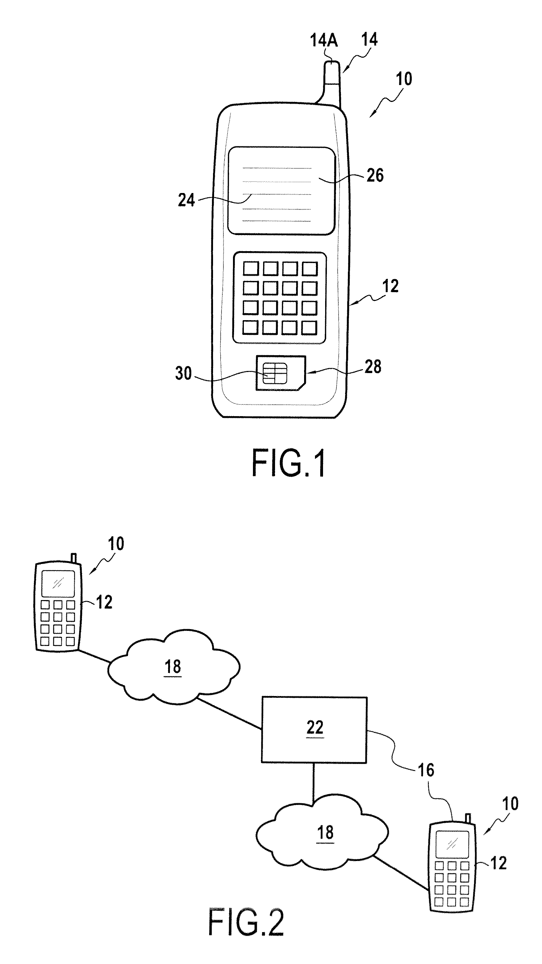

On a représenté sur **la** **figure 1** un système de communication selon un premier mode de réalisation. Ce système est désigné par la référence générale 10.

Le système 10 comprend un terminal de communication 12 qui est selon ce premier mode de réalisation un téléphone cellulaire.

De façon classique, le téléphone cellulaire 12 comprend des moyens 14 de communication de données avec un équipement externe 16 via un réseau de communication de données 18, tel qu'un réseau de téléphonie mobile (représenté sur **la** **figure 2**). De façon classique, les moyens de communication 14 comprennent par exemple une antenne 14A ainsi que des moyens électroniques et/ou logiciels incorporés dans le téléphone 12.

Par exemple, le réseau de téléphonie 18 est du type sans fil ou filaire et est conforme au standard GPRS (General Packet Radio System), 3G ou encore GSM (Global System for Mobile communications).

Comme cela est illustré sur **la** **figure 2****,** le téléphone 12 est apte à communiquer avec l'équipement externe 16 via ce réseau de téléphonie 18. Cet équipement externe 16 est par exemple un autre téléphone cellulaire 20 mais peut être également un serveur de messagerie vocale 22.

De préférence et comme cela est illustré sur **la** **figure 1****,** le téléphone 12 comprend également un écran 26 permettant l'affichage d'une interface graphique d'utilisateur 24.

En outre, le système 10 comprend un objet à microcircuit de poche 28. Cet objet à microcircuit 28 est, dans ce premier mode de réalisation, une carte d'identification à un réseau de téléphonie mobile. Par exemple, la carte à microcircuit est de type SIM (acronyme anglais pour « Subscriber Identity Module ») ou carte USIM (pour « Universal Subscriber Identity Module » encore appelée carte UICC pour « UMTS Integrated Circuit Card ») ou plus généralement carte RUIM (pour "Removable Universal Identity Module").

En variante, l'objet à microcircuit peut être une carte à microcircuit, une carte à microcircuit conforme à la norme prédéfinie ISO 7816, une carte à microcircuit de type USB, une carte à microcircuit de type MMC, une carte à microcircuit de type sans contact, une clé mémoire électronique, une carte mémoire de type micro SD, un dispositif MMC sécurisé, etc....

Cet objet 28 est apte à coopérer physiquement avec le téléphone cellulaire 12. Ainsi, la carte à microcircuit 28 comprend une interface 30 de contacts externes apte à être couplée avec une autre interface (non représentée) agencée dans un compartiment prévu à cet effet dans le corps du téléphone cellulaire 12. Lorsque la carte 28 est insérée dans le téléphone 12, elle peut alors échanger des données avec un équipement externe 16 via le réseau de communication de données 18.

Dans l'exemple décrit, cette carte 28 forme un élément sécurisé du téléphone cellulaire 12 et permet ainsi une authentification de l'utilisateur de cette carte sécurisée. Par exemple, une clé d'authentification de l'utilisateur est mémorisée dans la carte.

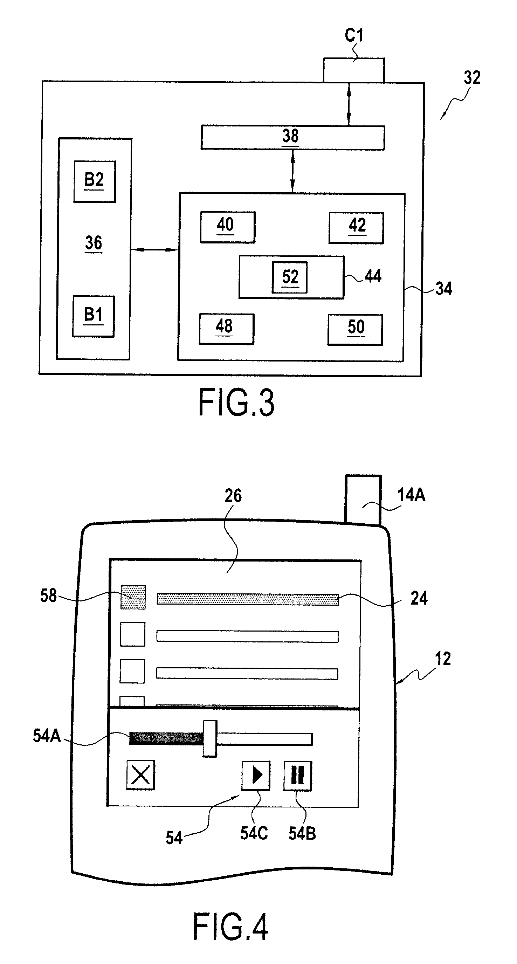

Dans cet exemple, la carte 28 comporte un corps de carte réalisée dans une matière plastique muni de l'interface de contacts électriques 30 et incorpore un microcircuit électronique 32 s'étendant en général au droit de l'interface 30. Ce microcircuit 32 est par exemple réalisé selon la technologie des circuits intégrés et est représentée de façon schématique sur **la** **figure 3****.**

De façon classique, le microcircuit 32 comprend des moyens 34 de traitement des données comprenant par exemple une unité centrale de traitement (CPU). Par exemple, les moyens de traitement comprennent un microcontrôleur 34. Ce microcontrôleur 34 est notamment apte à contrôler un dispositif donné et à fonctionner comme une unité autonome.

Le microcircuit 32 incorpore également des moyens 36 de mémorisation de données. Par exemple, les moyens de mémorisation 36 comprennent une partie vive (RAM) et une partie permanente, de type morte non réinscriptible (ROM) et de type morte réinscriptible (EEPROM, EPROM, mémoire flash, etc.). La partie morte réinscriptible permet notamment le stockage des données et programmes nécessaires à la réalisation d'une application.

En outre, de façon classique, le microcircuit 32 comprend également des moyens 38 d'émission-réception de données, comprenant par exemple un port série d'entrée-sortie raccordé à l'un des contacts de l'interface 30, notamment dans le cas de la norme ISO 7816, au contact C1 pour l'échange d'informations avec un lecteur de la carte, tel que dans l'exemple décrit le téléphone cellulaire 12.

Plus particulièrement, le microcontrôleur 34 comprend des moyens 40 d'analyse d'au moins un message vocal en provenance du serveur de messagerie vocale 22 accessible via le réseau 18. Ces moyens d'analyse 40 sont configurés pour extraire de ce message au moins un fichier audio et au moins une information utile associée au message **(****figure 2****).**

Le message vocal est par exemple incorporé en tant que pièce jointe d'un autre message, tel qu'un message MMS (Message Multimédia Service), un e-mail ou encore est par exemple associé à un message SMS (Short Message Service), etc. Dans ce cas, les moyens d'analyse 40 sont également aptes à extraire la pièce jointe formant le message vocal du message l'incorporant.

En outre, les moyens de mémorisation 36 de la carte 28 sont aptes à mémoriser le fichier audio extrait du message vocal. Le fichier audio comprend des données vocales enregistrées par le serveur de messagerie vocale 22 dans la boîte vocale de l'utilisateur par exemple dans un format de données de type « MP3 ». Ces données vocales ont été émises par un correspondant distant, par l'exemple l'utilisateur de l'autre terminal 20, qui n'a par exemple pas réussi à établir une connexion avec l'utilisateur du terminal 12.

L'information utile est par exemple choisie parmi un identifiant d'un émetteur du message vocal, une date d'émission et/ou de réception du message vocal. Bien entendu, en variante, d'autres informations utiles peuvent être retenues comme pertinentes par les moyens de traitement 34 et en particulier, toute information permettant de différencier deux messages entre eux.

En outre, le microcircuit 32 comprend un client de messagerie 42 apte à communiquer avec le serveur de messagerie 22 distant de l'opérateur via le terminal de communication 12. Par exemple, le client de messagerie 42 forme une partie du microcontrôleur 34.

Dans l'exemple décrit, le client de messagerie 42 est apte à émettre régulièrement une requête à destination du serveur de messagerie vocale 22 pour détecter l'arrivée d'un nouveau message vocal. Dans le cas où un nouveau message vocal est arrivé, le client de messagerie 42 commande le téléchargement du message vocal auprès du serveur 22.

Lorsqu'un nouveau message vocal est disponible sur la boîte vocale du serveur de messagerie, le serveur 22 le notifie à la carte à microcircuit 28 par un message de type SMS, e-mail ou autres qui comprend en pièce jointe le message vocal ou est associé au message vocal, par exemple dans le cas des SMS.

En variante, le serveur peut également avertir la carte à microcircuit d'un tel événement, à savoir la disponibilité d'un nouveau message, par un protocole de communication du type XMPP (« eXtensible Messaging and Presence Protocol »).

De préférence, le client de messagerie 42 est un client fonctionnant selon le protocole de messagerie IMAP (de la terminologie anglo-saxonne « Internet Mail Access Protocol »). De façon connue en soi, ce protocole de messagerie électronique garantit une communication entre le serveur de messagerie vocale 22 et le client de messagerie 42.

La carte 28 télécharge alors le nouveau message pour l'analyser avec le microcontrôleur 34.

En variante, le serveur de messagerie 22 peut fonctionner conformément au mode « push » (de la terminologie anglo-saxonne « pousser »). De préférence, le client de messagerie 42 est alors également configuré en mode « push ». Dans ce cas, le serveur de messagerie 22, dès réception d'un message vocale dans la boîte vocale de l'utilisateur du terminal 12 « pousse » le message vocal à destination du terminal mobile 12, plutôt que de laisser le terminal 12 initier lui-même une consultation des messages. De façon plus précise, les messages peuvent être « poussés » par le serveur 22 dès qu'un accès réseau est disponible pour le terminal 12. Ce mode de transfert de messages confère une relativement grande réactivité de la part de l'utilisateur.

Dans une autre variante, à la requête du client de messagerie 42 et indirectement à la requête de l'utilisateur, le message vocal peut être téléchargé en mode « streaming » (diffusion en flux). Dans ce cas, le message peut être écouté concurremment à son téléchargement sans que ce dernier ne soit encore complètement achevé.

Plus précisément et conformément à l'invention, la carte à microcircuit 28 comprend des moyens 44 de génération d'une structure de données apte à déterminer un contenu visuel de l'interface graphique d'utilisateur 24 du terminal de communication 12. Par exemple, les moyens de génération 44 forment une partie du microcontrôleur 34.

De façon plus précise, la structure de données ainsi générée par les moyens 44 incorpore l'information utile et un lien d'accès vers le fichier audio mémorisé. A cet effet, plus particulièrement, le terminal 12 comprend encore des moyens de mise en forme (non représentés) de la structure de données générées pour afficher le contenu visuel de l'interface graphique sur l'écran du terminal.

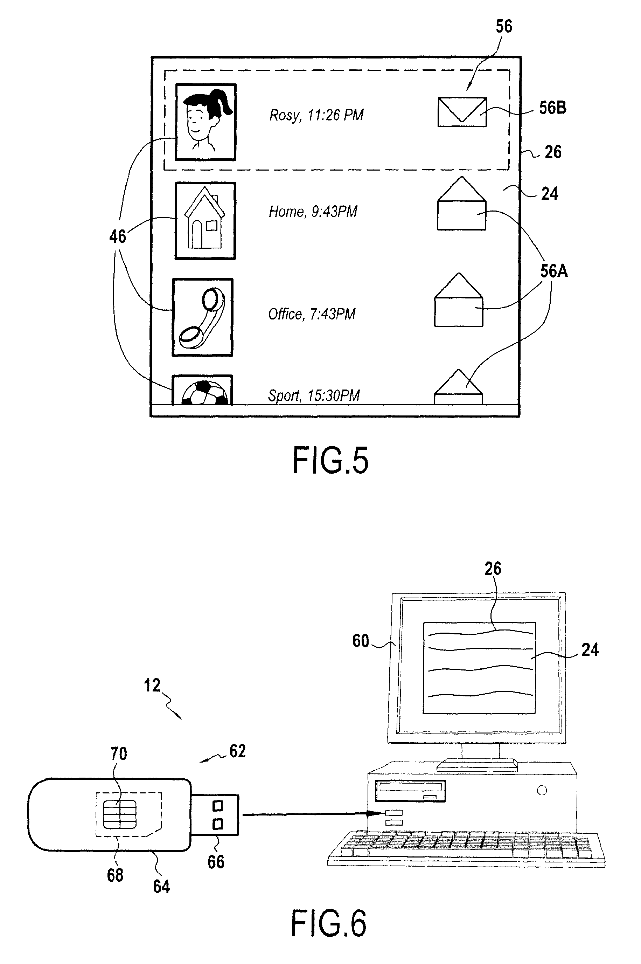

Dans un mode de réalisation préféré de l'invention, les moyens de mémorisation 36 stockent également une base de données B1 associant un identifiant de contacts sélectionnés par l'utilisateur avec un élément représentatif 46 de ce contact choisi par l'utilisateur. Par exemple, un élément représentatif 46 comprend un pseudonyme, un avatar, une photographie, etc **(****figure 5****).**

Cette base de données B1 forme ainsi un répertoire téléphonique enrichi. Dans ce cas, l'information utile correspondant à l'identifiant est associée à cet élément représentatif 46 et la structure de données générée comprend l'information utile sous cette forme de manière à ce que le contenu visuel affiché comprenne cet élément représentatif 46 plutôt qu'un numéro de téléphone ce qui permet à l'utilisateur d'identifier aisément le correspondant qui a essayé de le joindre.

Dans un mode de réalisation préféré de l'invention, les moyens de génération 44 comprennent un serveur Web et la structure de données forme une page Web. De préférence, la page web est au format HTML, XHTML, WML, DHTML, Javascript ou XML.

Par exemple, le serveur web 44 est conforme à la norme JAVACARD 3.0 ou encore Smart Card Web Server.

En outre, par exemple, les moyens de mise en forme comprennent un navigateur web apte à communiquer avec le serveur Web de la carte 28 lorsque cette dernière coopère physiquement dans le terminal 12.

La carte à microcircuit 28 embarque ainsi le serveur Web 44 ce qui permet au terminal mobile 12 d'accéder à l'application de gestion de messagerie et donc aux messages vocaux via son navigateur web (en anglais, « web brower»).

Dans le mode de réalisation préféré de l'invention, les moyens de traitement 34 comprennent des moyens 48 de création d'une base de données B2 établissant un lien entre l'information utile et le fichier audio associé et des moyens 50 de mise à jour de cette base à chaque réception d'un message vocal ou à chaque réalisation d'un nouvel événement. Cette base de données B2 est par exemple stockée dans les moyens de mémorisation 36 de la carte.

De préférence, les moyens de génération 44 comprennent des moyens 52 de gestion de messages vocaux par l'intermédiaire de la structure de données générée. Ainsi, par exemple, les moyens 52 sont aptes à incorporer des liens utiles dans la structure de données pour fournir à l'utilisateur via l'interface graphique 24, des éléments graphiques d'opérer une gestion des messages vocaux.

Par exemple, comme cela est illustré sur **les fîgures 4 et 5**, les moyens de gestion 52 comprennent des moyens choisis parmi : des moyens de listage des messages, des moyens 58 de sélection d'un message, des moyens 54 de lecture d'un message, de défilement de messages, de suppression d'un message, d'enregistrement d'un message, de tri de messages, de réception d'un message, de retransmission d'un message, de filtrage de messages, de diffusion de messages, d'archivage de messages, d'annotation du message, d'indexation du message, des moyens 56 de différentiation d'un message lu 56A d'un message non lu 56B.

Dans l'exemple décrit, les moyens de lecture 54 du message comprennent une barre de progression 54A, une fonction pause 54B et/ou une fonction lecture 54C **(****figure 4****).**

On a représenté sur **la** **figure 6****,** un système de communication 10 selon un deuxième mode de réalisation de l'invention. Sur cette figure, les éléments analogues à ceux des figures précédentes sont désignés par des références identiques.

Dans ce deuxième mode, le terminal de communication 12 comprend un ordinateur personnel 60 et une clé mémoire 62 comprenant un corps 64 muni d'un connecteur 66. Le connecteur 66 est par exemple conforme à la norme USB.

L'ordinateur personnel 60 comprend un écran 26 permettant l'affichage d'une interface graphique d'utilisateur 24. En outre, l'ordinateur 60 comprend des moyens pour communiquer des données avec un équipement distant via un réseau de communication de données (non représentés). Par exemple, le réseau de communication de données est le réseau internet. Il peut s'agir d'un réseau à fil ou sans fil. De façon classique, l'ordinateur 60 comprend un port USB (non représenté) dans lequel le connecteur 66 est apte à venir en prise.

Le système 10 comprend également un objet à microcircuit de poche 28. Dans ce deuxième mode de réalisation, l'objet est un jeton personnel 68 sécurisé de type carte à microcircuit SIM (acronyme anglais « Suscriber identity Module »). La clé mémoire 62 comprend une interface de contacts (non représentée) apte à coopérer physiquement avec une interface 70 du jeton personnel 68.

Ainsi, comme cela est illustré sur **la** **figure 6****,** le jeton personnel 68 est apte à coopérer avec la clé mémoire 62 qui forme ainsi un lecteur de carte à microcircuit. Le jeton personnel 68 comprend également le microcircuit 32 décrit ci-dessus. De préférence, ce microcircuit 32 est également en outre apte à communiquer selon un protocole USB avec l'ordinateur personnel 60 via la clé mémoire 62 lorsque cette dernière est insérée dans le port USB de l'ordinateur 60.

On va maintenant décrire en référence **aux** **figures 1 à 5**, les principaux aspects de fonctionnement d'un système de communication 10 selon le premier mode de réalisation de l'invention. Le fonctionnement du système 10 selon le deuxième mode de réalisation est sensiblement identique.

Initialement, le terminal 12 est indisponible. Par exemple, le terminal 12 est hors ligne ou est dans une zone sans couverture réseau. Un correspondant tente de joindre l'utilisateur du terminal 12 sans succès et enregistre par conséquent un message vocal sur la boîte vocale du serveur de messagerie 22.

Le terminal 12 entre alors à dans une zone de couverture réseau ou met en ligne son terminal 12 (selon son état initial). Ainsi, le client de messagerie 42 émet une requête à destination du serveur 22 pour interroger ce dernier sur la présence ou non d'un nouveau message vocal. Le serveur de messagerie 22 répond au client 22 conformément au protocole IMAP.

Le client de messagerie IMAP 42 du terminal 12 télécharge le message vocal et le microcontrôleur 34 analyse ce message vocal. En particulier, il extrait un fichier audio qu'il stocke dans la mémoire 36 et une information utile associée à ce message. Cette information utile est répertoriée dans la base de données mémorisée B2 qui établit un lien entre l'information et le fichier audio. De préférence, cette base de données B2 est ainsi mise à jour par les moyens 50 à chaque nouvel événement, l'événement pouvant consister en la réception d'un message vocal ou encore un changement de statut « lu », « non lu » du message vocal, etc.

En variante, le serveur de messagerie 22 peut envoyer une notification indiquant au terminal 12 la présence d'un nouveau message vocal dans sa boîte vocale.

Puis, l'utilisateur du terminal 12 choisit par exemple dans un menu général fourni par l'interface graphique 24, une fonction « consultation des messages ».

Le terminal 12 met alors en forme la structure de données formant la page web et affiche un contenu visuel déterminé par cette page web. Le serveur web formant les moyens de génération 44 du microcontrôleur 34 génère une page web à destination du navigateur web du terminal 12. La page web comprend par exemple également des moyens graphiques de gestion des messages vocaux.

Cette page web incorpore notamment l'information utile du nouveau message, par exemple un identifiant du correspondant sous forme de deux éléments représentatifs 46 (un avatar 46A et un pseudonyme 46B « Rosy ») lié au numéro de téléphone du correspondant si ce dernier est répertorié dans la base de données B1 et une date ou heure de réception du message ainsi qu'un lien d'accès vers l'unité de mémoire des moyens 36 stockant le fichier audio. Ce lien d'accès est activé lorsque l'utilisateur sélectionne un des messages vocaux de la liste affichée par la page web sur l'écran 24.

Ainsi, comme cela est illustré sur **la** figure 5, les messages sont listés et des informations utiles sont associées à chacun des messages.

Dans l'exemple décrit, chaque message est associé à un identifiant comprenant un avatar et un pseudonyme tel que par exemple « Rosy », « Home », « Office », « Sport », ainsi qu'une indication précisant si le message a été lu 56A ou non lu 56B, une heure de réception ou d'émission. Cette liste de messages est par ailleurs de préférence mise à jour régulièrement par le serveur web 44 en fonction des données de la base B2 elle-même réactualisée par les moyens de mise à jour 50.

L'utilisateur identifie alors le nouveau message. Ce dernier est par exemple marqué comme non lu, L'utilisateur choisit alors une fonction « écoute du message ».

De préférence, il peut également arrêter à tout moment cette écoute et également observer la durée restante d'écoute du message grâce à la barre de progression. Une fois le message écouté, ce dernier est marqué « comme lu » par l'interface 24 suite à la génération d'une nouvelle structure de données par le serveur web 44. Ainsi, les moyens 50 actualisent la base de données B2 en changeant l'indication « non lu » du message en « lu ».

Grâce à l'invention, l'utilisateur peut conserver les messages dans l'objet à microcircuit pendant une durée souhaitée. En outre, les messages peuvent être conservés sur un support sécurisé lorsque l'objet est par exemple une carte SIM.

En outre, même en changeant de terminal de communication, les messages sont sauvegardés dans l'objet portable. Une connexion au réseau de communication de données, tel que le réseau de l'opérateur n'est pas nécessaire dans le cas d'une relecture du message vocal.

En outre, l'utilisateur n'a pas plus besoin d'appeler sa boîte vocale par téléphone pour consulter ses messages vocaux. L'espace de stockage est formé par les moyens de mémorisation de l'objet à microcircuit et non plus par le serveur de l'opérateur ce qui laisse libre l'utilisateur de supprimer ces messages quand il le souhaite.

Il est bien entendu que la présente invention n'est pas limitée à l'exemple de réalisation préférentiel et à la mise en oeuvre décrits, mais qu'elle peut être modifiée ou adaptée en fonction des besoins ou des exigences particulières, sans pour autant sortir du cadre de l'invention.

## Revendications

1. Objet à microcircuit (28) de poche agencé pour coopérer physiquement avec un terminal (12) de communication muni d'une interface graphique d'utilisateur (24), pour l'échange de données avec un équipement externe (22, 20) via un réseau de communication (18), **caractérisé en ce qu'**il comprend des moyens (40) d'analyse d'au moins un message vocal en provenance d'un serveur de messagerie vocale (22) accessible via le réseau (18) pour en extraire au moins un fichier audio et une information utile associée au message, des moyens (36) de mémorisation du fichier et des moyens (44) de génération d'une structure de données apte à déterminer un contenu visuel de l'interface (24), la structure de données incorporant l'information utile et un lien d'accès vers le fichier audio mémorisé.

2. Objet (28) selon la revendication précédente, dans lequel les moyens de génération (44) comprennent un serveur web et la structure de données forme une page web.

3. Objet (28) selon la revendication 2, dans lequel le serveur web (44) est du type « Javacard 3.0» et/ou « Smart Card Web Server ».

4. Objet (28) selon la revendication 2 ou 3, dans lequel la page web est au format HTML, XHTML, WML, DHTML, Javascript ou XML.

5. Objet (28) selon l'une quelconque des revendications précédentes, comprenant en outre un client de messagerie (42) apte à communiquer avec le serveur de messagerie vocale (22).

6. Objet (28) selon la revendication précédente, dans lequel le client de messagerie (22) est configuré pour fonctionner en mode « push », en mode « streaming », et/ ou configuré pour communiquer conformément au protocole IMAP.

7. Objet (28) selon l'une quelconque des revendications précédentes, dans lequel les moyens d'analyse (40) sont aptes à extraire le message vocal d'un autre message l'incorporant en pièce jointe.

8. Objet selon l'une quelconque des revendications précédentes, comprennent des moyens (48) de création d'une base de données (B2) établissant un lien entre l'information utile et le fichier audio associé et des moyens (50) de mise à jour de cette base (B2) à chaque réception d'un message vocal.

9. Objet (28) selon l'une quelconque des revendications précédentes, dans lequel l'information utile est choisie parmi un numéro d'identification d'un émetteur du message vocal, une date d'émission et/ou de réception du message vocal, un identifiant de l'émetteur du message vocal.

10. Objet (28) selon l'une quelconque des revendications précédentes, dans lequel les moyens de génération (44) comprennent des moyens (52) de gestion de messages vocaux par l'intermédiaire de la structure de données générée.

11. Objet (28) selon la revendication précédente, dans lequel les moyens de gestion (52) comprennent des moyens choisis parmi : des moyens de listage des messages, de sélection d'un message, de lecture d'un message, de défilement de messages, de suppression d'un message, d'enregistrement d'un message, de tri de messages, de réception d'un message, de retransmission d'un message, de filtrage de messages, de diffusion de messages, d'archivage de messages, d'annotation du message, d'indexation du message, des moyens de différentiation d'un message lu d'un message non lu.

12. Objet (28) selon l'une quelconque des revendications précédentes, étant choisi parmi une carte à microcircuit, une carte à microcircuit conforme à la norme prédéfinie ISO 7816, une carte à microcircuit de type USB, une carte à microcircuit de type MMC, une carte à microcircuit de type sans contact, une carte à microcircuit d'identification à un réseau de téléphonie mobile, une carte SIM, une carte USIM, une clé mémoire électronique, une carte mémoire de type micro SD, un dispositif MMC sécurisé.

13. Système de communication (10) comprenant un terminal de communication (12) muni d'une interface graphique d'utilisateur (26) et un objet de poche (28) agencé pour coopérer physiquement avec le terminal de communication (12), **caractérisé en ce que** l'objet de poche (28) est selon l'une quelconque des revendications précédentes et le terminal de communication (12) comprend des moyens de mise en forme de la structure de données générées pour afficher le contenu visuel sur l'interface graphique.

14. Système (10) selon la revendication précédente, dans lequel les moyens de génération (44) étant formés en partie par un serveur web, les moyens de mise en forme du terminal (12) comprennent un navigateur web.
